# EUROPEAN PATENT SPECIFICATION

(11) **EP 1 808 018 B1**
(45) Date of publication and mention of the grant of the patent: **08.03.2017**
(21) Application number: 05812613.7
(22) Date of filing: 21.10.2005
(51) Int. Cl.: G06T 7/00, H04N 7/18

(54) **IMAGE SENSOR ANNOTATION METHOD AND APPARATUS**
Verfahren und Vorrichtung zur Bildsensornotierung
PROCEDE ET APPAREIL D'ANNOTATION DE CAPTEUR D'IMAGE

(30) Priority: 04.11.2004 US 624895 P; 25.07.2005 US 188493
(43) Date of publication of application: 18.07.2007
(73) Proprietor: Rockwell Automation Technologies, Inc., Mayfield Heights, OH 44124 (US)
(72) Inventor: GOOD, John, M., North Andover, MA 01845 (US)
(74) Representative: Grünecker Patent- und Rechtsanwälte PartG mbB
(86) International application number: PCT/US2005/038037
(87) International publication number: WO 2006/052425

(56) References cited:
- US-A- 4 758 888
- US-A- 5 146 509
- US-A1- 2002 009 220
- US-A1- 2002 009 220
- US-A1- 2002 051 061
- US-A1- 2002 109 112
- US-A1- 2004 098 156
- US-B1- 6 741 755
- US-B1- 6 741 755

## Description

### CROSS REFERENCE TO RELATED APPLICATION

This application claims the benefit of U.S. Provisional Application No. 60/624,895 filed on November 4, 2004 entitled "IMAGE SENSOR ANNOTATION METHOD AND APPARATUS" and U. S. Patent Application Serial No. 11/188,493 filed July 25, 2005 entitled "IMAGE SENSOR ANNOTATION METHOD AND APPARATUS". The entireties of these applications are incorporated herein by reference.

### TECHNICAL FIELD

The subject invention relates generally to quality control of an industrial process, and more particularly to system and methods that facilitate visual representation of failed or rejected items in manufacturing processes *via* image indicators.

### BACKGROUND OF THE INVENTION

Currently, there is a trend in industrial technology to replace traditional mechanical gauging with cost-saving, easy-to-use vision sensor technology. A single vision sensor can typically surpass operation efficiency of mechanical measurement sensors in various industrial processes, such as: checking if caps are present and installed in correct positions, inspection of screws, measurements of flat punched steel, tasks involving a check for completeness of objects and the like.

In addition, viable vision sensor technology is particularly advantageous in the field of Industrial controllers, which are special-purpose computers utilized for controlling industrial processes, manufacturing equipment, and other factory automation, such as data collection or networked systems. In such environments, according to a control program, the industrial controller, having an associated processor (or processors), measures one or more process variables or inputs reflecting the status of a controlled system, and changes outputs effecting control of such system. These systems generally include a plurality of Input and Output (I/O) modules that interface at a device level to switches, contactors, relays and solenoids along with analog control to provide more complex functions such as Proportional, Integral and Derivative (PID) control. The inputs and outputs may be binary, (*e*.*g*., on or off) as well as analog inputs and outputs assuming a continuous range of values. Accordingly, the industrial control systems have enabled modern factories to become partially or completely automated in many circumstances. In such environments, the desire to replace the traditional mechanical gauging with cost-saving image sensor systems has created a growing demand for fast and precise vision systems for a wide variety of industrial control applications.

Typical examples of vision sensors are proximity sensors, which are available in a wide variety of configurations to meet a particular user specific sensing needs. Such sensors can be end-mounted in a housing, side-mounted in a housing, and the like, to facilitate mounting in confined spaces, while at the same time permitting the sensor to be directed towards a sensing region as deemed necessary by a manufacturing process inspection.

Additionally, proximity sensors are available with varied sensing ranges, and can be shielded or unshielded. Shielded inductive proximity sensors can be mounted flush with a surface, and in general such sensors do not interfere with other inductive proximity sensors, yet they can have diminished sensing range when compared with unshielded proximity sensors.

Moreover, various types of proximity sensors are used for detecting the presence or absence of an object. Common types of non-contact proximity sensors include inductive proximity sensors, capacitive proximity sensors, ultrasonic proximity sensors, and photoelectric sensors. Such sensors, for example, can be used in motion or position applications, conveyor system control applications, process control applications, robotic welding applications, machine control applications, liquid level detection applications, selecting and counting applications, and the like.

Typically, in conventional image sensor systems, captured images are displayed to an operator in a manner or format that can require cumbersome analysis by such operator to determine troubled spots in the displayed images. Such manner of display can hinder manufacturing, as development cycles are becoming faster and faster.

At the same time, the operator typically cannot readily summon desired images from conventional image sensors, to pin point a troubled area at a particular time or location of the manufacturing assembly line.

Therefore, there is a need to overcome the aforementioned exemplary deficiencies associated with conventional devices.

US 2004/098156 A1 relates to an inspection status display method capable of confirming the content of a defect in real time. The inspection status display method comprises, when a defect is detected in an inspection work, superimposing a defect image in a predetermined size that contains the defect in the inspection work image and a master pattern image corresponding to the defect image, and displaying an inspection status of the inspection work in a window on a display device. When a defect is detected in the inspection work, an NG mark is displayed at a position on the inspection work image that corresponds to a position of the defect. Design value data which is created by a CAD system is read out and pattern edge data are extracted from the readout CAD data and set as a master pattern serving as an inspection criterion.

US 2002/109112 A1 relates to cameras for processing images at the front end of the system to limit the bandwidth required to transmit image data. A robust web inspection system is provided that is capable of expansion. Each camera is connected to a marking system for marking the web proximate to each flaw or defect with corresponding codes or other markings. Only web flaw information and web flaw images are sent to the host computer. The detection of regularly occurring flaws may indicate specific problems with the web manufacturing equipment. The multi-level thresholder is set to distinguish predetermined thresholds. For example, a grey scale having three groups may be utilized to categorize each pixel as acceptable, dark and light. 2D blob analysis data which includes the bounding box data, the area, the length, the width and the aspect ratio, is analyzed according to the predetermined inspect/reject criteria. The high contrast web inspection system only utilizes a fixed threshold to classify individual pixels, e.g. grey scale pixels are compared to a threshold.

US 2002/009220 A1 relates to a defect inspection system comprising image acquiring means for acquiring a two-dimensional image of a subject which is a processing target in a manufacturing process; defect extracting means for extracting a defect from an image acquired by the image acquiring means by a defect extraction algorithm using a predetermined parameter; parameter adjusting means for adjusting the parameter in accordance with defect extraction degree for the subject; and quality judging means for judging the quality of the subject based on a defect information extracted by the defect extracting means. The quality judging means has: a function of checking the defect information extracted by the defect extracting means with defect data registered in a defect dictionary to determine a type of the defect; and a function of registering new defect data in the defect dictionary. The defect extraction section removes an outer shape image inherent to the substrate, a specific pattern image or the like, and extracts defective parts from all the substrate images stored in the image storage section based on a defect extraction algorithm using a predetermined parameter.

US 6 741 755 B1 relates to a system and methodology for enabling portions of image regions to be extracted from adjacent background regions via a mixture-based opacity determination near the contours of the extracted image region. Blurring effects and unwanted background portions are mitigated in the extracted image region. The set of pixels are dilated to include regions of blur relating to the contour. Each pixel in the dilated set is analyzed wherein two values are computed to separate the image foreground region from its background. These values may be determined as a foreground value and an alpha.

### SUMMARY OF THE INVENTION

It is the object of the present invention to simplify computations for quality control in a manufacturing line.

This object is solved by the subject matter of the independent claims.

Preferred embodiments are defined by the dependent claims.

The following presents a simplified summary of the invention in order to provide a basic understanding of one or more aspects of the invention. This summary is not an extensive overview of the invention. It is intended to neither identify key or critical elements of the invention, nor to delineate the scope of the subject invention. Rather, the sole purpose of this summary is to present some concepts of the invention in a simplified form as a prelude to the more detailed description that is presented hereinafter.

The subject invention provides for systems and methods that facilitate visual representation/detection of items that fail a quality inspection in a manufacturing process, by employing an indicator component that annotates and points out troubled spots on a digital image of the failed item. Such indicator component can present a form of a visual cue, for example a pictogram, color prompt, bar code, symbol, and the like on an image taken by an image sensor from a failed or rejected part. The indicator component can include: a boundary definition system that separates an image foreground from a background, a dilation system that can expand regions along the boundary or contour pixels to mitigate blur, and a mixture based analysis system to determine a mixing ratio to enable smooth mixing of the foreground region with the annotated markups, which show failed areas of the rejected unit. The annotated digital images can be saved in a memory of the image sensor or an external memory, and be displayed to an operator or technician, as required. The technician can directly connect to the image sensor *via* a mobile terminal, or alternatively down load desired digital images thru a network.

In accordance with an aspect of the subject invention, the system can include a smart camera sensor and an indicator component, wherein smart camera can be equipped with functions to inspect items manufactured as part of a batch process. The smart camera can compare patterns from a digital image of a manufactured item with a "signature" image/ reference value previously stored. Based on such comparison, a determination can be made to verify whether the item has failed the inspection criteria. If so, the indicator component can supply an annotation on the digital image (*e.g.,* super imposed thereon) to facilitate visual representation/detection for parts of the item that failed the inspection. The inspection criteria can for example be based upon an area test of the digital image, color transitions among image pixels, positioning of the image and the like. In a related aspect, various artificial intelligence component(s) can be employed in conjunction with inferring whether an item can pass inspection criteria, and for annotation of the failed parts on the digital image. The digital image can be saved as a common format (*e.g.,* JPEG), while it can be retrieved in a variety of formats, such as Graphics Interchange Format (GIF), Portable Network Graphics (PNG) and other imaging software formats - for example thru a plurality of devices connected to the image sensor *via* a network, or a Universal Serial Bus (USB), an external bus, and the like.

According to a methodology of the subject invention, the smart camera can initially capture a digital image of a manufactured item, and store such image in a memory of the camera, or an external storage. Next, the digital image can be compared to a signature image that defines acceptable and unacceptable levels of image parameters (*e.g.,* contrast, brightness, color, and the like) among adjacent and/or non adjacent pixels. If a measured level of such image parameter falls within a predefined acceptable range, then the manufactured item can be deemed to have passed a quality inspection, other wise the item is considered to have failed the inspection. The digital image of such failed item can then be selectively annotated to facilitate visual representation/detection of the failed areas on the digital image. Based on the type of failure annotated on the image, the manufacturing procedure can then be corrected to mitigate occurrence of similar production failures.

To the accomplishment of the foregoing and related ends, the invention, then, comprises the features hereinafter fully described. The following description and the annexed drawings set forth in detail certain illustrative aspects of the invention. However, these aspects are indicative of but a few of the various ways in which the principles of the invention may be employed. Other aspects, advantages and novel features of the invention will become apparent from the following detailed description of the invention when considered in conjunction with the drawings.

### BRIEF DESCRIPTION OF THE DRAWINGS

Fig. 1 illustrates a schematic diagram of a digital image that is annotated to facilitate representation of failed segments according to the subject invention.
Fig. 2 illustrates a system that annotates a digital image to show failed portions in accordance with an aspect of the subject invention.
Fig. 3 illustrates a block diagram of an image sensor that can employ predetermined criteria for quality control of manufactured items *via* their digital image in accordance with an aspect of the invention.
Fig. 4 illustrates another block diagram of an image sensor that can employ an artificial intelligence component in accordance with an aspect of the invention.
Fig. 5 illustrates a plurality of devices networked with an image sensor for viewing an annotated digital image according to the subject invention.
Figs. 6a-6b illustrate an area test evaluation of the digital image, as an inspection criterion in accordance with an aspect of the subject invention.
Figs. 7a-7b illustrate another area test of the digital image, as an inspection criterion according to one aspect of the invention.
Fig. 8 illustrates a method of inspecting an item *via* its digital image in accordance with an aspect of the subject invention.
Fig. 9 illustrates a brief general description of a suitable computing environment as part of an industrial controller, in conjunction with an image sensor that monitors a line assembly, wherein the various aspects of the subject invention can be implemented.

### DETAILED DESCRIPTION OF THE INVENTION

The subject invention is now described with reference to the drawings, wherein like reference numerals are used to refer to like elements throughout. In the following description, for purposes of explanation, numerous specific details are set forth in order to provide a thorough understanding of the subject invention. It may be evident, however, that the subject invention may be practiced without these specific details. In other instances, well-known structures and devices are shown in block diagram form in order to facilitate describing the subject invention.

As used in this application, the terms "component," "handler," "model," "system," and the like are intended to refer to not only a mechanical, but also a computer-related entity, for example either hardware, a combination of hardware and software, software, or software in execution. For example, a component can be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers. Also, these components can execute from various computer readable media having various data structures stored thereon. The components can communicate *via* local and/or remote processes such as in accordance with a signal having one or more data packets (*e.g.,* data from one component interacting with another component in a local system, distributed system, and/or across a network such as the Internet with other systems *via* the signal).

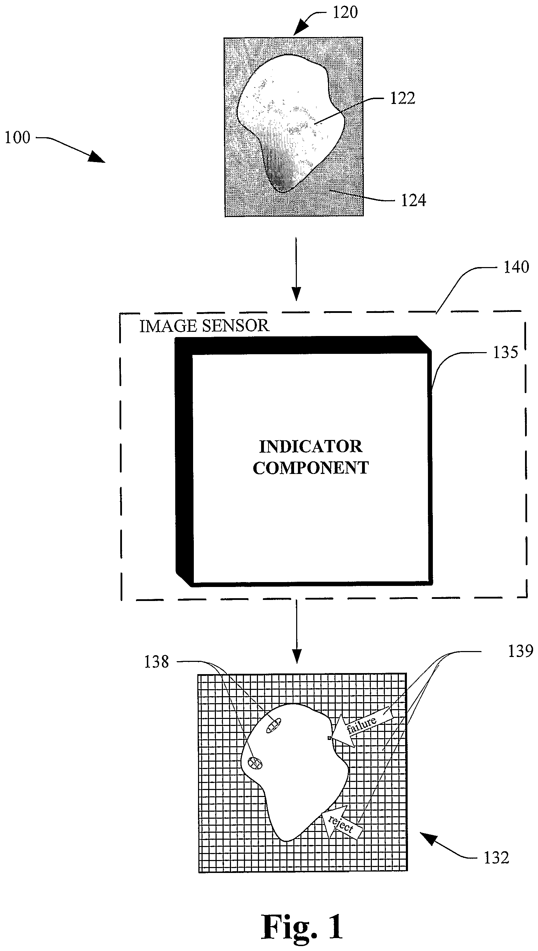

The subject invention provides for systems and methods that facilitate visual representation/detection of failed parts by employing an indicator component that points out a failed portion of a unit on its image taken by an image sensor. Such indicator component can present a form of a visual cue, for example a pictogram, color prompt, symbol, bar code and the like on an image taken by an image sensor from a failed part. Referring initially to Fig. 1, a system 100 illustrates an image processing and annotation system in accordance with an aspect of the subject invention. An image 120 having both a foreground region 122 and a background region 124, is taken from a manufactured item in order to verify a quality thereof. Such quality control can be part of applications in automation technology, for example, imprint check, label check, edge detection, position detection, object detection and the like. Typically, an image that is stored electronically consists out of a plurality of picture elements (*e.g.,* pixels). The larger the total number of pixels for one image, the finer the resolution. Similarly, when saving such an image to a computer memory, one pixel can in general occupy one storage cell. Accordingly, images with a high resolution (many pixels) can require more space in a memory and more processing time in a respective computer.

At the same time, the two types of compression, lossless and lossy (*e.g.,* JPEG) can be employed with the subject invention. Typically, lossless compression allows exact original data to be recovered after compression, while lossy compression allows for data recovered after compression to differ from the original data. A tradeoff exists between the two compression modes in that lossy compression provides for a better compression ratio than lossless compression because some degree of data loss is tolerated. Lossless compression may be used, for example, when compressing critical text, because failure to reconstruct exactly the data can dramatically affect the quality and readability of text. Lossy compression can be used with images or non-critical text where a certain amount of distortion or noise is either acceptable or imperceptible to human senses. Accordingly, the digital image 120 can be saved in both formats.

Typically, digital image of the subject invention can include text, images and/or text and images, which undergoes a visual detection for failed parts. Upon an indication that the digital image 120 has failed the inspection criteria, (as discussed in detail *infra*), the foreground 122 can be extracted *via* an indicator component 135 from the image 120. The indicator component 135 can be part of the image sensor 140, or can be operatively connected thereto as an external unit. The foreground 122 can then be transferred to a second and/or subsequent image 132, with a different background region 139 that supplies visual cues of the failure type and /or characteristics. The cues that indicate the troubled spots 138 can for example be in a form of arrows, pictogram, color prompt, symbol, bar code and the like that are indicated as part of the background region 139.

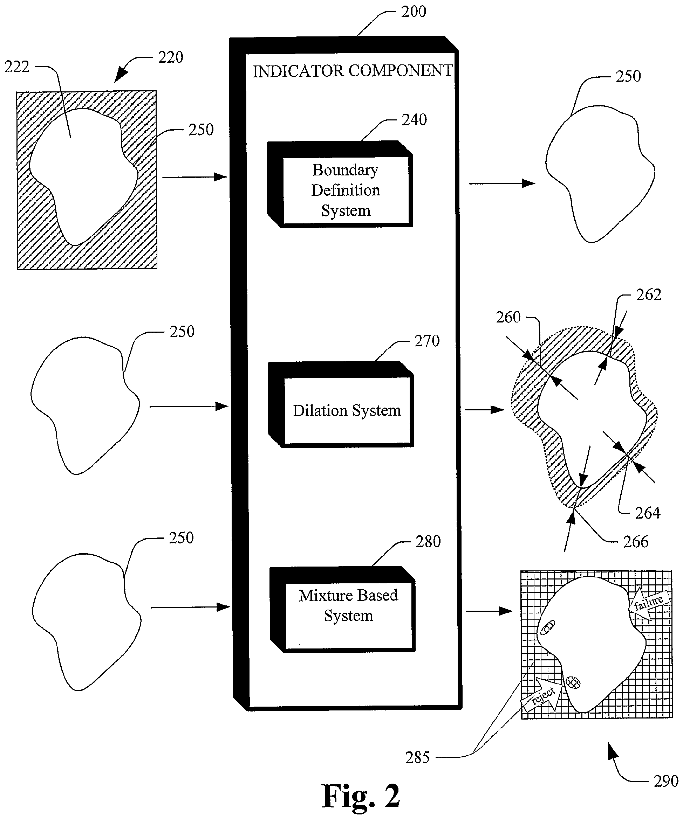

Referring now to Fig. 2, an indicator component 200 in accordance with an aspect of the subject invention is illustrated. The indicator component 200 can include a boundary definition system 240, a dilation system 270 and a mixture based system 280.

The boundary definition system 240 can be employed to define a chain or grouping of contour pixels 250, which are associated with the exterior of the foreground region 222. The boundary definition system 240 can be substantially any well-known system for selecting the contour 250 of the foreground region 222. These systems can include for example, various "Intelligent Scissors" mechanisms, as well as other suitable systems that provide foreground pixel contour definitions/selections. Such systems can enable a user and/or system to select/define the exterior of the foreground region 222 (*e.g.,* mouse selection, area defined by an overlaid object on the image) and output the chain or grouping of contour pixels 250 associated with the selection/definition of the foreground region 222. It is to be appreciated that before image processing commences in accordance with the subject invention, other image processing techniques may be applied to smooth, filter, and/or otherwise preprocess the original captured image 220. For example, a Gaussian smoothing function that is known in the art may be applied to the image 220 in order to filter potential pixel-wide noise sources.

Upon selecting the contour pixels 250 of the image 220, a dilation system 270 can be employed to expand the region associated with the contour pixels 250. A contour dilation is illustrated at the output of the dilation system 270, wherein the contour pixels 250 are expanded to include adjacent foreground portions and/or background portions from the image 220. For example, four possible areas of dilation are illustrated at reference numerals 260, 262, 264, and 266. It is to be appreciated that reference numerals 260-266 are exemplary in nature and that all portions of the contour pixels 250 may be similarly expanded. Such dilation can be user defined or can be determined *via* analytical techniques.

Typically, image blurring can occur along regions of the contour pixels 250, wherein background and foreground colors may be mixed across several pixels near the contour. This may occur for various reasons, such as if the image 220 was digitally captured *via* a lens with inadequate focus, because of motion blur during capture, for example, and/or as a result of other well-known causes. Thus, by expanding the contour pixels 250 as depicted at reference numeral 260-266, blurring effects in the image 220 can be accounted for. A mixture-based analysis system 280 can be employed for determining a mixing ratio to enable smooth mixing of the foreground region 222 or its dilated version with an annotated background region 285.

The annotated digital image 290 can present a form of a visual cue, for example a pictogram, color prompt, symbol, bar code and the like on an image 220 taken by an image sensor from a failed or rejected part. The annotated digital images can be saved in a memory of the image sensor or an external memory.

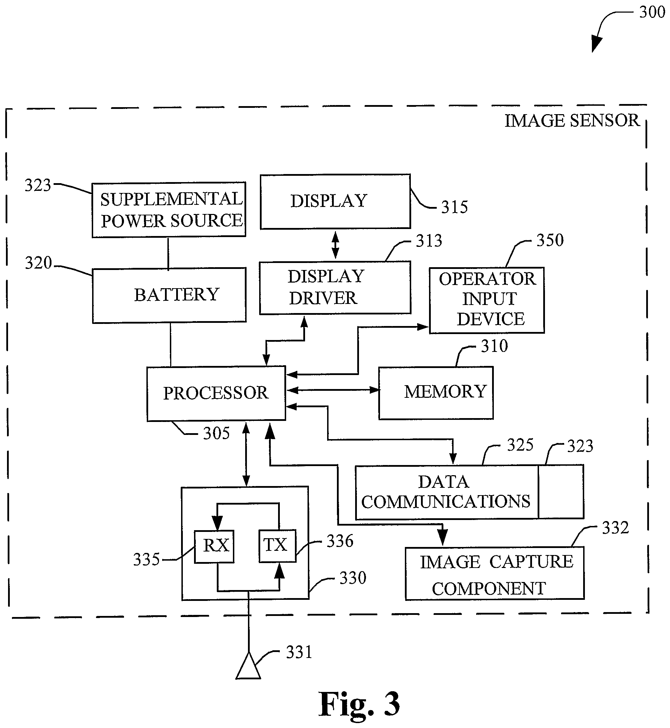

Turning now to Figure 3, a schematic block diagram is illustrated for an image sensor according to one aspect of the subject invention, in which a processor 305 is responsible for controlling the general operation of the image sensor 300, a well as determining whether the digital image taken from an item fails the inspection criteria. The processor 305 can alternatively be part of an external intelligent device that is operatively connected to the image sensor 300, and has the ability to sense or display information, or convert analog information into digital, or perform mathematical manipulation of digital data, or interpret the result of mathematical manipulation, or make decisions on the basis of the information. As such, the processor 305 can be part of a logic unit, a computer or any other intelligent device capable of making decisions based on the data gathered by the image capture component 332. A memory 310 can be coupled to the processor 305 to store program code executed by the processor 305 for carrying out operating functions of the digital sensor system 300 as described herein. The memory 310 can include read only memory (ROM) and random access memory (RAM). The ROM contains among other code the Basic Input-Output System (BIOS) which controls the basic hardware operations of the image system 300. The RAM is the main memory into which the operating system and application programs are loaded. The memory 310 also serves as a storage medium for storing information, such as signature images and/or values that define the criteria for failing a quality inspection, and rejection of an item from the assemble line. For mass data storage, the memory 310 can include a hard disk drive (e.g., 10 Gigabyte hard drive), and the like.

The processor 305 can be programmed to control and operate the various components within the image sensor 300 in order to carry out the various functions described herein. The processor or CPU 305 can be any of a plurality of suitable processors. The manner in which the processor 305 can be programmed to carry out the functions relating to the subject invention will be readily apparent to those having ordinary skill in the art based on the description provided herein.

As explained above, the memory 310 tied to the processor 305 can also be included as part of the image sensor, and serves to store program code executed by the processor 305 for carrying out operating functions of the image sensor 300 as described herein. The memory 310 also serves as a storage medium for storing information such as user defined functions, storing the annotated digital images for a later down load or a transfer to another device and the like. The memory 310 is adapted to store a complete set of the information to be displayed. According to one aspect, the memory 310 has sufficient capacity to store multiple sets of information, and the processor 305 could include a program for alternating or cycling between various sets of applications and/or annotated display information. As explained earlier, annotations super imposed on a digital image, which is captured *via* the image capture component 332, can facilitate visual representation/detection of failed parts. For example, such annotations can present a form of a visual cue, such as a pictogram, color prompt, symbol, bar code and the like on an image taken by an image sensor from a failed or rejected part.

A display 315 can be operatively connected to the processor 305 *via* a display driver system 313, as part of the image sensor, or as an external unit coupled thereto. The display 315 can be a liquid crystal display (LCD) or the like. The display 315 functions to display data or other information relating to the annotated digital image of a rejected item. For example, the display 315 can display the annotated failed image to the technician with suggested recommendations to mitigate problem in the manufacturing line. Such information can also be transmitted to other devices a system backbone (not shown).

Additionally, the display 315 may display a variety of functions that control the operation of the image sensor and/or the manufacturing line. The display 315 is capable of displaying both alphanumeric and graphical characters. Power is provided to the processor 305 and other components forming the image sensor 300 by at least one battery 320. In the event that the battery(s) 320 fails or becomes disconnected from the image sensor 300, a supplemental power source 323 can be employed to provide power to the processor 305. The image sensor 300 may enter a minimum current draw of sleep mode upon detection of a battery failure.

The image sensor 300 can also include a communication subsystem 325 that includes a data communication port 323, which is employed to interface the processor 305 with a network *via* a host computer (not shown). The image sensor 300 also can include an RF section 330 connected to the processor 305. The RF section 330 includes an RF receiver 335, which receives RF transmissions from the network for example *via* an antenna 331 and demodulates the signal to obtain digital information modulated therein. The RF section 330 also includes an RF transmitter 336 for transmitting information to a computer on the network, for example, in response to an operator input at a operator input device 350 (e.g., keypad, touch screen) or the completion of a transaction.

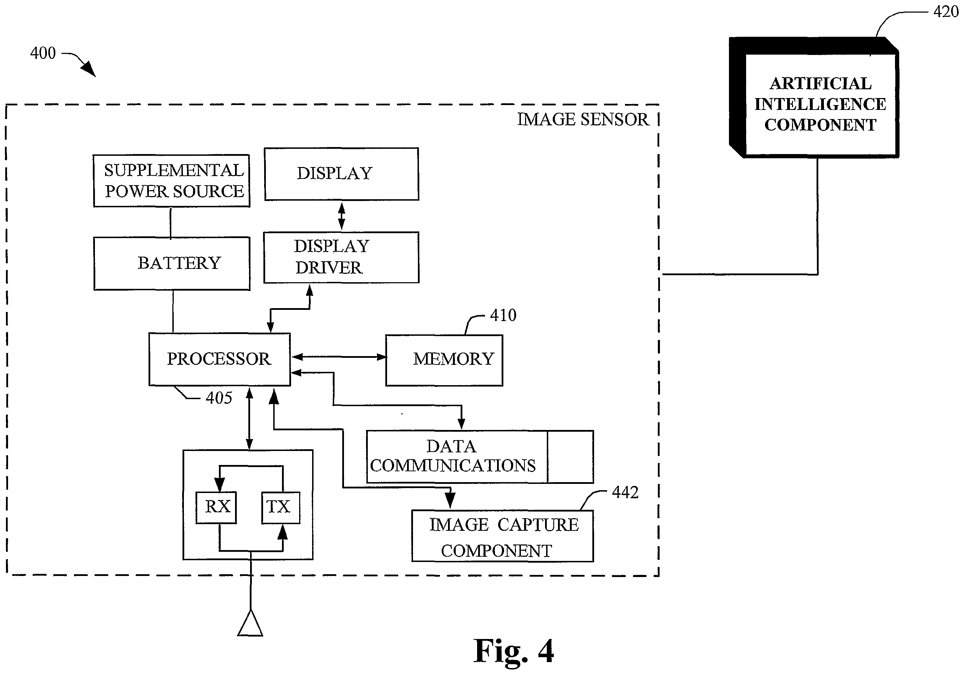

Figure 4 illustrates another block diagram of an image sensor 400 that employs an artificial intelligence component 420 in accordance with an aspect of the subject invention, to facilitate inferring whether an item can pass the inspection criteria, and for annotation of the failed parts on the digital image.

As used herein, the term "inference" refers generally to the process of reasoning about or inferring states of the system, environment, and/or user from a set of observations as captured *via* events and/or data. Inference can be employed to identify a specific context or action, or can generate a probability distribution over states, for example. The inference can be probabilistic - that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

The subject invention (*e.g.,* in connection with deciding whether a digital image of an item matches a signature image) can employ various artificial intelligence based schemes for carrying out various aspects thereof. For example, a process for failing an item based on its digital image can be facilitated *via* an automatic classification system and process. Such classification can employ a probabilistic and/or statistical-based analysis (*e.g.,* factoring into the analysis utilities and costs) to prognose or infer an action that is desired to be automatically performed. For example, a support vector machine (SVM) classifier can be employed. A classifier is a function that maps an input attribute vector, x = (x1, x2, x3, x4, xn), to a confidence that the input belongs to a class - that is, f(x) = *confidence*(*class*). Other classification approaches include Bayesian networks, decision trees, and probabilistic classification models providing different patterns of independence can be employed. Classification as used herein also is inclusive of statistical regression that is utilized to develop models of priority. As will be readily appreciated from the subject specification, the subject invention can employ classifiers that are explicitly trained (*e.g., via* a generic training data) as well as implicitly trained (*e.g., via* observing system behavior, receiving extrinsic information) so that the classifier(s) is used to automatically determine according to a selected criteria which regions to choose. For example, with respect to SVM's it is to be appreciated that other classifier models may also be utilized such as Naive Bayes, Bayes Net, decision tree and other learning models - SVM's are configured *via* a learning or training phase within a classifier constructor and feature selection module.

By way of example, the processor 405 can be programmed to compare (*e.g.,* by pattern matching techniques for the digital image, interpolation or otherwise) one or more captured values (*e.g.,* brightness and/or contrast for pixels of the digital image) by the image capture component 442 to one or more stored values. The stored values can be maintained in the memory data store 410 and can include, for example, acceptable and unacceptable levels of brightness, contrast, position and the like, among the pixels of the digital image. By way of further example, the processor 405 can determine whether the image captured *via* the image capture component 442 has a gray scale above a certain threshold level and/or whether the color of pixels on such image is more than a particular percentage, such that the color layout and positioning of the pixels are not coincident with that of a signature image.

For example, if a measured level for darkness of pixels in a designated area falls within a pre-defined acceptable range, then the processor 405 can consider the digital image and the item itself to have passed an inspection test. If, however, the level of non-uniformity, exceeds a pre-defined range, then the processor 405 can direct the manufactured item (or portions thereof) to be discarded, since the sheer amount of non-uniformity, as determined by pixels non-conforming to the signature image, has rendered the manufactured item unsalvageable. The determination to fail or discard an item can be based upon, for example, a programmed cost-benefit analysis, Bayesian system neural network, rule based expert system, and the like. For example, if the cost of repairing or reducing the non-uniformity outweighs the benefit received from such repair, then it could be determined that it would be more cost and time effective to simply discard the item, or portions thereof.

Additionally, the processor 405 can selectively adjust control of the assembly line for correction and determine what type of adjustments are to be made to particular fabrication components to effect the same. The processor 405 can also transmit such adjustments to the appropriate assembly line fabrication components (not shown) for the purpose of, for example, mitigating occurrences of non-uniform structure formation, or other undesirable processing. The processor 405 can, for example, be programmed to utilize non-linear training systems to determine the appropriate adjustments to make according to the information received from the image capture component 442. This can be referred to as feedback/feed forward control data that facilitates achieving desired results.

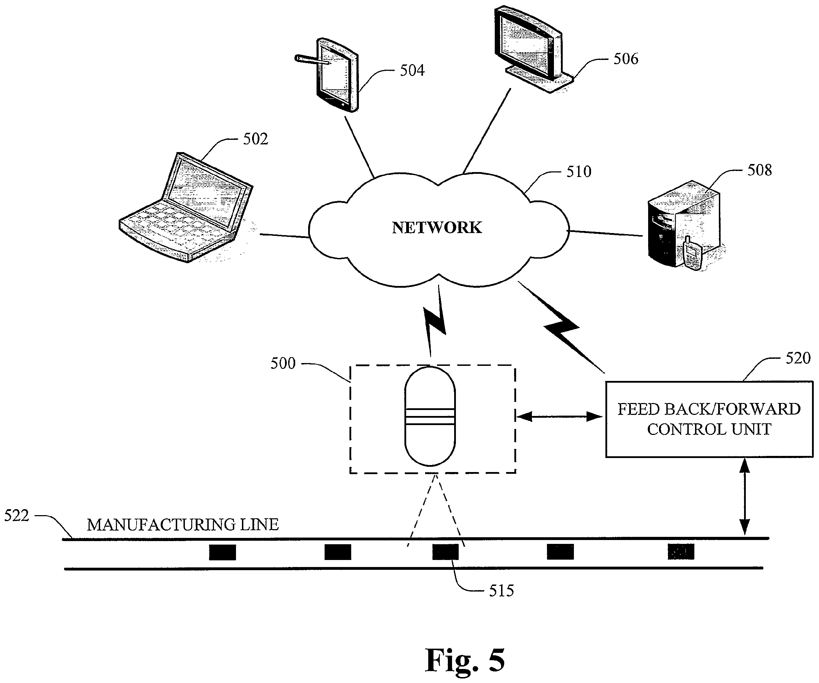

Fig. 5 illustrates a vision sensor 500 connected *via* a network 510 to a plurality of devices. The plurality of devices can include a personal computer, work stations personal digital assistant, monitors and the like, which can access the digital images and marked up annotations of rejected items in the vision sensor 500. The network 510 can be, for example, an Ethernet LAN, a token ring LAN, or other LAN. It is to be appreciated that the network 510 can also include a Wide Area Network (WAN), which can include hardwired and/or optical and/or wireless connection paths. In addition, the connection to the network 510 can be, for example, a modem connection, a DSL connection and/or a wireless connection, and can also be shared among a plurality of devices connected to the network 510. The image sensor 500 can typically assure precise quality controls on an industrial manufacturing line.

The digital image can be saved as a common format (*e.g.,* JPEG) in a memory of the image sensor 500 or an external memory. At the same, such digital image can be retrieved in a variety of formats, such as Graphics Interchange Format (GIF), Portable Network Graphics (PNG) and other imaging software formats - for example thru a plurality of devices (502, 504, 506, and 508) connected to the image sensor 500, *via* the network 510.

As such, the annotated image of a rejected part 515 can be readily transferred to a technician for an analysis thereof, and proper remedial actions for correction of the line assembly/manufacturing can be instigated. Similarly, the annotated image can be analyzed by an artificial intelligence component as described *supra*, and based on such analysis a feedback/forward control unit 520 can adjust the process of the manufacturing line 522. A display system can display the digital images (annotated) to a technician, *e.g.,* such technician may require viewing digital images taken at a particular time and/or location on the manufacturing line assembly. Moreover, the technician can directly connect to the image sensor 500 *via* a mobile terminal, or alternatively down load desired digital images thru the network 510.

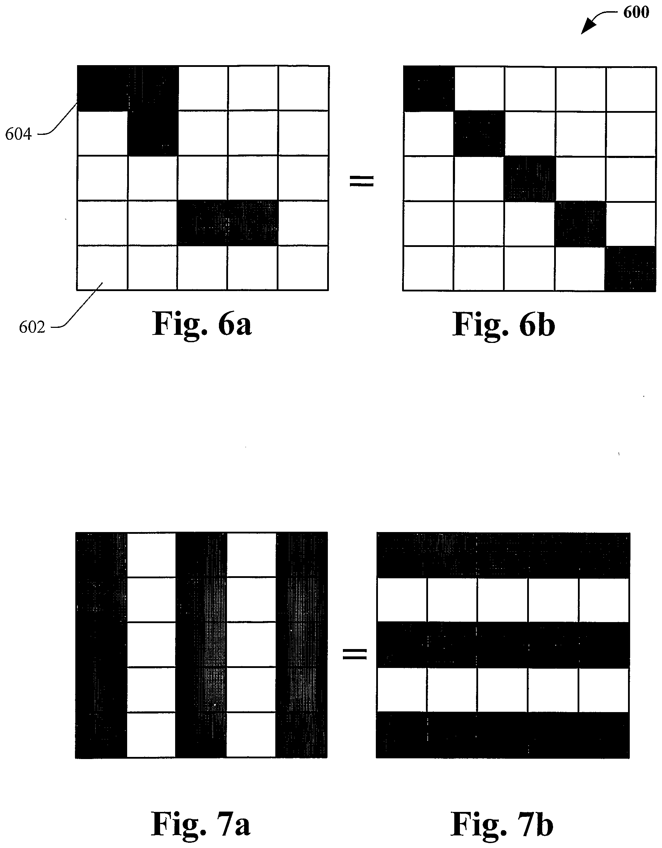

Figs. 6a and 6b illustrate an "area test" for rejection of an item based on the bitmap pattern image captured by the sensor. The two dimensional pattern 600 can be divided into a plurality of grids, consisting of a plurality of pixels such as 602, 604. The test criteria employed by the image sensor and/or logic unit operatively connected to the image sensor, can be the number of black pixels available in such grid pattern. At the same time, a threshold value can be set to classify a pixel as black (*e.g.,* grey value < 128). As such, both Figs. 6a and 6b provide the same result, as in both patterns five out of twenty five pixels are recognized as black by the image sensor. Such test can be employed by the image sensor when inspecting labels affixed to items on a manufacturing assembly line, wherein the actual text on the label and its location can be widely neglected, since the number of pixels is the determinative factor. The images of the failed item can then be annotated and displayed to a user as described in detail *supra.*

Likewise, an area test for contrast among pixels can be employed for rejecting a manufactured item as illustrated in Figs 7a -7b. The dark and bright pixels can be rated by their quantity and intensity, and a rejection (or acceptance) result can for example be based on the absolute value of the summation of all grey values <128, subtracted from the summation of all grey values > 128. As such, Fig. 7a yields a same result as Fig. 7b. It is to be appreciated that various other criteria based on contrast, brightness, and color can be employed depending upon the type and nature of the item to be inspected *via* the image sensor.

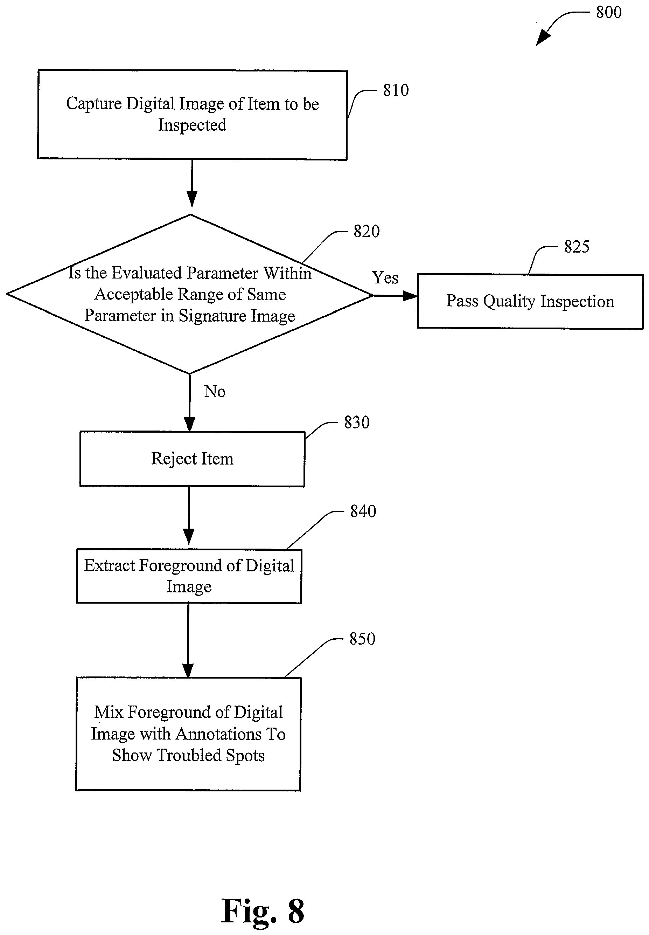

Fig. 8 illustrates a methodology 800 of annotating an image of a rejected part in accordance with an aspect of the subject invention. Initially, and at 810 a digital image of an item manufactured in an assembly line can be captured *via* a smart image sensor, to verify a quality of the manufactured item. Such quality control can be part of applications in automation technology, for example, imprint check, label check, edge detection, position detection, object detection and the like. The captured digital image can have both a foreground region and a background region. Next and 820, the digital image can be compared to a signature image that defines acceptable and unacceptable levels of evaluated image parameters (*e.g.,* contrast, brightness, color, and the like) among adjacent and/or non adjacent pixels. If a measured level of such evaluated parameter falls within a predefined acceptable range, then the manufactured item can be deemed to have passed a quality inspection at 825.

Other wise the item is considered to have failed the inspection, at 830. The digital image of such failed item can then be selectively annotated to facilitate visual representation/detection of the failed areas on the digital image. As such, at 840 the foreground of such image can be extracted, and at 850 transferred to a second and/or subsequent annotation background region. The annotated image can then be displayed to a technician to indicate the troubled spots, and provide cues for correction of the manufacturing process.

While the exemplary method is illustrated and described herein as a series of blocks representative of various events and/or acts, the present invention is not limited by the illustrated ordering of such blocks. For instance, some acts or events may occur in different orders and/or concurrently with other acts or events, apart from the ordering illustrated herein, in accordance with the invention. In addition, not all illustrated blocks, events or acts, may be required to implement a methodology in accordance with the present invention. Moreover, it will be appreciated that the exemplary method and other methods according to the invention may be implemented in association with the method illustrated and described herein, as well as in association with other systems and apparatus not illustrated or described.

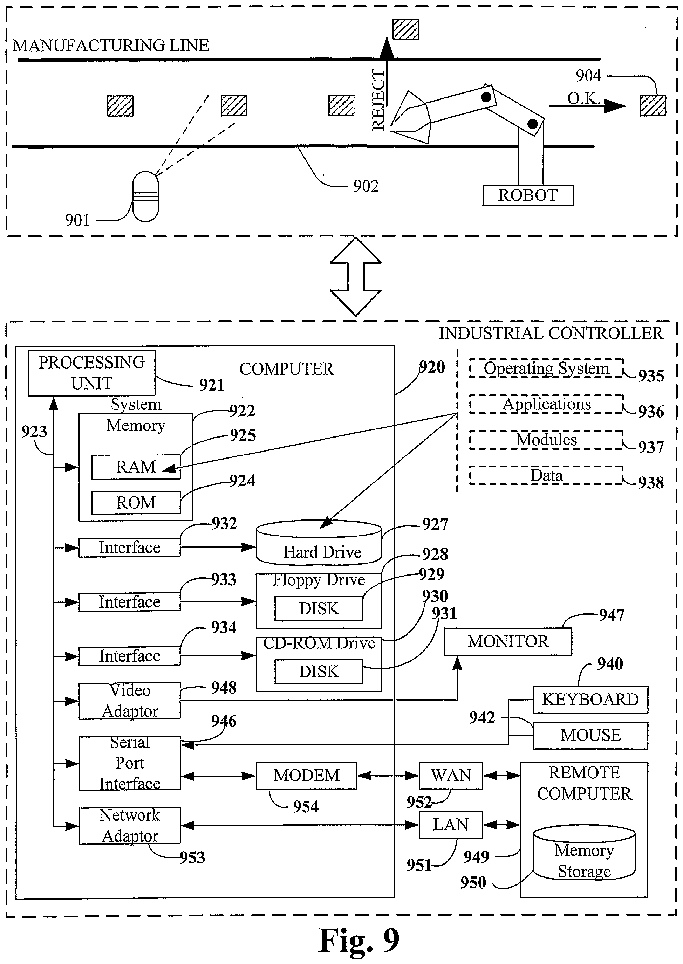

Referring now to Fig. 9, in conjunction with an image sensor 901 that monitors a line assembly 902 of manufactured items 904, a brief general description of a suitable industrial controller with a computing environment is illustrated, wherein the various aspects of the subject invention can be implemented. While the invention has been described above in the general context of computer-executable instructions of a computer program that runs on a computer and/or computers, those skilled in the art will recognize that the invention can also be implemented in combination with other program modules. Generally, program modules include routines, programs, components, data structures, *etc.* that perform particular tasks and/or implement particular abstract data types. Moreover, those skilled in the art will appreciate that the inventive methods can be practiced with other computer system configurations, including single-processor or multiprocessor computer systems, minicomputers, mainframe computers, as well as personal computers, hand-held computing devices, microprocessor-based or programmable consumer electronics, and the like. As explained earlier, the illustrated aspects of the invention can also be practiced in distributed computing environments where tasks are performed by remote processing devices that are linked through a communications network. However, some, if not all aspects of the invention can be practiced on stand-alone computers. In a distributed computing environment, program modules can be located in both local and remote memory storage devices. The exemplary environment includes a computer 920, including a processing unit 921, a system memory 922, and a system bus 923 that couples various system components including the system memory to the processing unit 921. The processing unit 921 can be any of various commercially available processors. Dual microprocessors and other multi-processor architectures also can be used as the processing unit 921.

The system bus can be any of several types of bus structure including a memory bus or memory controller, a peripheral bus, and a local bus using any of a variety of commercially available bus architectures. The system memory may include read only memory (ROM) 924 and random access memory (RAM) 925. A basic input/output system (BIOS), containing the basic routines that help to transfer information between elements within the computer 920, such as during start-up, is stored in ROM 924.

The computer 920 further includes a hard disk drive 927, a magnetic disk drive 928, *e.g.,* to read from or write to a removable disk 929, and an optical disk drive 930, *e.g.,* for reading from or writing to a CD-ROM disk 931 or to read from or write to other optical media. The hard disk drive 927, magnetic disk drive 928, and optical disk drive 930 are connected to the system bus 923 by a hard disk drive interface 932, a magnetic disk drive interface 933, and an optical drive interface 934, respectively. The drives and their associated computer-readable media provide nonvolatile storage of data, data structures, computer-executable instructions, etc. for the computer 920. Although the description of computer-readable media above refers to a hard disk, a removable magnetic disk and a CD, it should be appreciated by those skilled in the art that other types of media which are readable by a computer, such as magnetic cassettes, flash memory cards, digital video disks, Bernoulli cartridges, and the like, can also be used in the exemplary operating environment, and further that any such media may contain computer-executable instructions for performing the methods of the subject invention.

A number of program modules can be stored in the drives and RAM 925, including an operating system 935, one or more application programs 936, other program modules 937, and program data 938. The operating system 935 in the illustrated computer can be substantially any commercially available operating system.

A user can enter commands and information into the computer 920 through a keyboard 940 and a pointing device, such as a mouse 942. Other input devices (not shown) can include a microphone, a joystick, a game pad, a satellite dish, a scanner, or the like. These and other input devices are often connected to the processing unit 921 through a serial port interface 946 that is coupled to the system bus, but may be connected by other interfaces, such as a parallel port, a game port or a universal serial bus (USB). A monitor 947 or other type of display device is also connected to the system bus 923 *via* an interface, such as a video adapter 948. In addition to the monitor, computers typically include other peripheral output devices (not shown), such as speakers and printers.

The computer 920 can operate in a networked environment using logical connections to one or more remote computers, such as a remote computer 949. The remote computer 949 may be a workstation, a server computer, a router, a peer device or other common network node, and typically includes many or all of the elements described relative to the computer 920, although only a memory storage device 950 is illustrated in Fig. 9. The logical connections depicted in Fig. 9 may include a local area network (LAN) 951 and a wide area network (WAN) 952. Such networking environments are commonplace in offices, enterprise-wide computer networks, Intranets and the Internet.

When employed in a LAN networking environment, the computer 920 can be connected to the local network 951 through a network interface or adapter 953. When utilized in a WAN networking environment, the computer 920 generally can include a modem 954, and/or is connected to a communications server on the LAN, and/or has other means for establishing communications over the wide area network 952, such as the Internet. The modem 954, which can be internal or external, can be connected to the system bus 923 *via* the serial port interface 946. In a networked environment, program modules depicted relative to the computer 920, or portions thereof, can be stored in the remote memory storage device. It will be appreciated that the network connections shown are exemplary and other means of establishing a communications link between the computers can be employed.

In accordance with the practices of persons skilled in the art of computer programming, the subject invention has been described with reference to acts and symbolic representations of operations that are performed by a computer, such as the computer 920, unless otherwise indicated. Such acts and operations are sometimes referred to as being computer-executed. It will be appreciated that the acts and symbolically represented operations include the manipulation by the processing unit 921 of electrical signals representing data bits which causes a resulting transformation or reduction of the electrical signal representation, and the maintenance of data bits at memory locations in the memory system (including the system memory 922, hard drive 927, floppy disks 928, and CD-ROM 931) to thereby reconfigure or otherwise alter the computer system's operation, as well as other processing of signals. The memory locations wherein such data bits are maintained are physical locations that have particular electrical, magnetic, or optical properties corresponding to the data bits.

Although the invention has been shown and described with respect to certain illustrated aspects, it will be appreciated that equivalent alterations and modifications will occur to others skilled in the art upon the reading and understanding of this specification and the annexed drawings. In particular regard to the various functions performed by the above described components (assemblies, devices, circuits, systems, etc.), the terms (including a reference to a "means") used to describe such components are intended to correspond, unless otherwise indicated, to any component which performs the specified function of the described component (e.g., that is functionally equivalent), even though not structurally equivalent to the disclosed structure, which performs the function in the herein illustrated exemplary aspects of the invention. In this regard, it will also be recognized that the invention includes a system as well as a computer-readable medium having computer-executable instructions for performing the acts and/or events of the various methods of the invention. Furthermore, to the extent that the terms "includes", "including", "has", "having", and variants thereof are used in either the detailed description or the claims, these terms are intended to be inclusive in a manner similar to the term "comprising."

## Claims

1. A system that facilitates quality control in a manufacturing line comprising:
a vision sensor (500) that captures a digital image of a manufactured item;
an indicator component (200) that annotates on the digital image a troubled manufacturing spot(s), to create an annotated image; and
a logic unit that compares the digital image to a signature image, and determines a quality of the manufactured item, wherein the signature image defines acceptable and unacceptable levels of image parameters among pixels of the digital image, wherein the image parameters comprise contrast, and wherein an area test for contrast among pixels is employed for rejecting the manufactured item based on the absolute value of the summation of all grey values smaller than 128, subtracted from the summation of all grey values larger than 128.

2. The system of claim 1, the indicator component comprises a boundary definition system that separates a foreground of the digital image from a background thereof.

3. The system of claim 1, the indicator component comprises a dilation system that expands regions along a boundary or contour pixels of the digital image to mitigate a blur of the annotated image.

4. The system of claim 1, the indicator component comprises a mixture based analysis system to determine a mixing ratio, to enable smooth mixing of the foreground region with annotated markups.

5. The system of claim 1, annotations of the troubled manufacturing spots comprise at least one of a pictogram, color prompt, bar code, and symbols.

6. The system of claim 1 further comprising a memory component as part of the vision sensor to store the annotated images for a down load to a network.

7. The system of claim 1 further comprising a memory component that stores a signature image for a comparison with the digital image.

8. The system of claim 1 further comprising a feed back or feed forward control system that adjusts operations of the manufacturing line based on analysis of the annotated image.

9. The system of claim 1 further comprising an artificial intelligence component.

10. A method of quality control in a manufacturing line assembly comprising:
capturing a digital image of a manufactured product; and
annotating the digital image to show troubled spots therein;
the method further comprising
comparing the digital image to a signature image, and determines a quality of the manufactured item, wherein the signature image defines acceptable and unacceptable levels of image parameters among pixels of the digital image, wherein the image parameters comprise contrast, and wherein an area test for contrast among pixels is employed for rejecting the manufactured item based on the absolute value of the summation of all grey values smaller than 128, subtracted from the summation of all grey values larger than 128.

11. The method of claim 10 further comprising extracting a foreground of the digital image.

12. The method of claim 10 further comprising mixing the foreground of the digital image with an annotation background.

13. The method of claim 10 further comprising transferring the digital image via a network to a plurality of devices connected thereto.

14. The method of claim 13 further comprising employing at least one of a lossless or lossy compression techniques.

15. The method of claim 10 further comprising adjusting processes in the manufacturing line assembly.

16. The method of claim 15 further comprising displaying an annotated image to a technician.

17. The method of claim 10 further comprising saving the digital image in one imaging format, and retrieving the digital image in another imaging format.

18. A computer-readable medium storing computer-executable instructions that facilitates quality control in a manufacturing line, the instructions, when executed by one or more processors, cause the one or more processors to perform a method comprising:
capturing a digital image of an item; and
annotating the digital image;
the computer-readable medium further comprising instructions for
comparing the digital image to a signature image, and determines a quality of the manufactured item, wherein the signature image defines acceptable and unacceptable levels of image parameters among pixels of the digital image, wherein the image parameters comprise contrast, and wherein an area test for contrast among pixels is employed for rejecting the manufactured item based on the absolute value of the summation of all grey values smaller than 128, subtracted from the summation of all grey values larger than 128.

19. The medium of claim 18 further comprising means for inferring a quality of the item.

## Patentansprüche

1. System, das die Qualitätskontrolle einer Fertigungslinie erleichtert, umfassend:
einen Bildsensor (500), der ein digitales Bild eines Fertigungsgegenstandes aufnimmt;
eine Anzeigekomponente (200), die auf dem digitalen Bild (einen) bedenkliche(n) Punkt(e) mit Anmerkungen versieht, um ein mit Anmerkungen versehenes Bild zu erzeugen; und
eine Logik-Einheit, die das digitale Bild mit einem Signaturbild vergleicht und eine Qualität des Fertigungsgegenstandes bestimmt, wobei das Signaturbild akzeptable und nicht akzeptable Pegel von Bildparametern unter den Pixeln des Digitalbildes definiert, wobei die Bildparameter einen Kontrast umfassen und wobei ein Bereichstest für den Kontrast unter Pixeln verwendet wird, um den Fertigungsgegenstand auf der Basis des absoluten Wertes der Summierung aller Grauwerte kleiner als 128 zurückzuweisen, die von der Summierung der Grauwerte größer als 128 abgezogen werden.

2. System nach Anspruch 1, wobei die Anzeigekomponente ein Grenzdefinitionssystem umfasst, das den Vordergrund des digitalen Bildes von einem Hintergrund davon trennt.

3. System nach Anspruch 1, wobei die Anzeigekomponente ein Dehnungssystem umfasst, das Regionen längs einer Grenze oder von Umrisspixeln des digitalen Bildes ausdehnt, um eine Unschärfe des mit Anmerkungen versehenes Bildes zu mindern.

4. System nach Anspruch 1, wobei die Anzeigekomponente ein auf einem Vermischen basierendes Analysesystem umfasst, um ein Mischungsverhältnis zu bestimmen, um ein gleichmäßiges Vermischen des Vordergrundbereiches mit den mit Anmerkungen versehenen Aufschlägen zu ermöglichen.

5. System nach Anspruch 1, wobei die Anmerkungen von bedenklichen Fertigungsgegenständen wenigstens ein Piktogramm, eine farbliche Aufforderung, einen Strichcode oder Symbole umfassen.

6. System nach Anspruch 1, das des Weiteren eine Speicherkomponente als Teil des Bildsensors umfasst, um das mit Anmerkungen versehene Bild für einen Download in ein Netzwerk zu speichern.

7. System nach Anspruch 1, das des Weiteren eine Speicherkomponente umfasst, die ein Signaturbild für einen Vergleich mit dem digitalen Bild speichert.

8. System nach Anspruch 1, das des Weiteren ein Rückführungs- oder Vorschub-Kontrollsystem umfasst, die Abläufe der Fertigungslinie auf der Basis der Analyse des mit Anmerkungen versehenen Bildes anpasst.

9. System nach Anspruch 1, das des Weiteren eine künstliche Intelligenzkomponente umfasst.

10. Verfahren zur Qualitätskontrolle in einer Fertigungslinienanordnung, das umfasst:
Aufnehmen eines digitalen Bildes eines Fertigungsproduktes; und
Versehen mit Anmerkungen auf dem digitalen Bild, um bedenkliche Punkte darin zu zeigen;
wobei das Verfahren des Weiteren umfasst:
Vergleichen des digitalen Bildes mit einem Signaturbild und Bestimmen der Qualität des Fertigungsgegenstandes, wobei das Signaturbild akzeptable und nicht akzeptable Pegel von Bildparametern unter den Pixeln des digitalen Bildes definiert, wobei die Bildparameter einen Kontrast umfassen und wobei ein Bereichstest für den Kontrast unter Pixeln verwendet wird, um den Fertigungsgegenstand auf der Basis des absoluten Wertes der Summierung aller Grauwerte kleiner als 128 zurückzuweisen, die von der Summierung der Grauwerte größer als 128 abgezogen werden.

11. Verfahren nach Anspruch 10, das des Weiteren das Extrahieren eines Vordergrundes des digitalen Bildes umfasst.

12. Verfahren nach Anspruch 10, das des Weiteren das Vermischen des Vordergrundes des digitalen Bildes mit einem Anmerkungshintergrund umfasst.

13. Verfahren nach Anspruch 10, das des Weiteren das Übertragen des digitalen Bildes über ein Netzwerk an eine Vielzahl von damit verbundenen Vorrichtungen umfasst.

14. Verfahren nach Anspruch 13, das des Weiteren die Anwendung von wenigstens einem verlustlosen oder verlustbehafteten Kompressionsverfahrens umfasst.

15. Verfahren nach Anspruch 10, das des Weiteren das Anpassen von Prozessen in der Fertigungslinienanordnung umfasst.

16. Verfahren nach Anspruch 15, das des Weiteren das Anzeigen eines mit Anmerkungen versehenen Bildes für einen Techniker umfasst.

17. Verfahren nach Anspruch 10, das des Weiteren das Sichern des digitalen Bildes in einem Bildformat und das Abrufen des digitalen Bildes in einem anderen Bildformat umfasst.

18. Computerlesbares Medium, das computerausführbare Anweisungen speichert, die die Qualitätskontrolle in einer Fertigungslinie erleichtern, wobei die Anweisungen, wenn sie durch einen oder mehr Prozessoren ausgeführt werden, den einen oder die mehr Prozessoren veranlassen, ein Verfahren durchzuführen, das umfasst:
Aufnehmen eines digitalen Bildes eines Gegenstandes; und
Versehen des digitalen Bildes mit Anmerkungen;
wobei das computerlesbare Medium des Weiteren Anweisungen umfasst, um
das digitale Bild mit einem Signaturbild zu vergleichen und eine Qualität des Fertigungsgegenstandes zu bestimmen, wobei das Signaturbild akzeptable und nicht akzeptable Pegel von Bildparametern unter den Pixeln des digitalen Bildes definiert, wobei die Bildparameter einen Kontrast umfassen und wobei ein Bereichstest für den Kontrast unter Pixeln verwendet wird, um den Fertigungsgegenstand auf der Basis des absoluten Wertes der Summierung aller Grauwerte kleiner als 128 zurückzuweisen, die von der Summierung der Grauwerte größer als 128 abgezogen werden.

19. Medium nach Anspruch 18, das des Weiteren Einrichtungen zum Ableiten einer Qualität des Gegenstandes umfasst.

## Revendications

1. Système destiné à faciliter le contrôle qualité dans une ligne de fabrication, comprenant :
un capteur de vision (500) qui prend une image numérique d'un article manufacturé,
un composant indicateur (200) qui annote sur l'image numérique un ou des points de fabrication perturbés afin de créer une image annotée, et
une unité logique qui compare l'image numérique à une image de signature et qui détermine la qualité de l'article manufacturé, l'image de signature définissant des niveaux acceptable et inacceptable de paramètres d'image parmi les pixels de l'image numérique, les paramètres d'image comprenant le contraste, et une zone de test du contraste parmi les pixels étant utilisée pour rejeter l'article manufacturé sur la base de la valeur absolue de la sommation de toutes les valeurs de gris inférieures à 128, soustraite de la sommation de toutes les valeurs de gris supérieures à 128.

2. Système selon la revendication 1, le composant indicateur comprenant un système de définition de limites qui sépare le premier plan de l'image numérique de l'arrière plan de celle-ci.

3. Système selon la revendication 1, le composant indicateur comprenant un système de dilatation qui étend les zones le long des limites ou des pixels de contours de l'image numérique afin d'atténuer une zone floue de l'image annotée.

4. Système selon la revendication 1, le composant indicateur comprenant un système d'analyse fondé sur le mélange permettant de déterminer un rapport de mélange afin d'autoriser un mélange en douceur de la zone de premier plan avec des marquages annotées.

5. Système selon la revendication 1, les annotations des points de fabrication perturbés comprenant au moins l'un d'un pictogramme, d'une invite colorée, d'un code à barres et de symboles.

6. Système selon la revendication 1, comprenant en outre un composant mémoire faisant partie du capteur de vision permettant de stocker les images annotées en vue d'un téléchargement vers un réseau.

7. Système selon la revendication 1, comprenant en outre un composant mémoire qui stocke une image de signature en vue d'une comparaison avec l'image numérique.

8. Système selon la revendication 1, comprenant en outre un système de contrôle par rétroaction ou par correction avale qui ajuste les opérations de la ligne de fabrication sur la base de l'analyse de l'image annotée.

9. Système selon la revendication 1, comprenant en outre un composant d'intelligence artificielle.

10. Procédé de contrôle qualité dans un ensemble de lignes de fabrication comprenant :
la capture d'une image numérique concernant un produit manufacturé, et
l'annotation de l'image numérique afin de représenter des points perturbés dans celle-ci,
le procédé comprenant en outre :
la comparaison de l'image numérique à une image de signature et la détermination de la qualité de l'article manufacturé, l'image de signature définissant des niveaux acceptable et inacceptable de paramètres d'image parmi les pixels de l'image numérique, les paramètres d'image comprenant le contraste, et une zone de test du contraste parmi les pixels étant utilisée pour rejeter l'article manufacturé sur la base de la valeur absolue de la sommation de toutes les valeurs de gris inférieures à 128 soustraite de la sommation de toutes les valeurs de gris supérieures à 128.

11. Procédé selon la revendication 10, comprenant en outre l'extraction du premier plan de l'image numérique.

12. Procédé selon la revendication 10, comprenant en outre le mélange du premier plan de l'image numérique avec un arrière-plan composé d'annotations.

13. Procédé selon la revendication 10, comprenant en outre le transfert de l'image numérique par l'intermédiaire d'un réseau à une pluralité de dispositifs reliés à celui-ci.

14. Procédé selon la revendication 13, comprenant en outre l'utilisation d'au moins l'une des techniques de compression sans perte ou avec pertes.

15. Procédé selon la revendication 10, comprenant en outre des traitements d'ajustement dans l'ensemble de lignes de fabrication.

16. Procédé selon la revendication 15, comprenant en outre l'affichage à un technicien d'une image annotée.

17. Procédé selon la revendication 10, comprenant en outre la sauvegarde de l'image numérique dans un format d'image et la récupération de l'image numérique dans un autre format d'image.

18. Support pouvant être lu par ordinateur stockant des instructions exécutables par ordinateur qui facilitent le contrôle qualité dans une ligne de fabrication, les instructions, lorsqu'elles sont exécutées par un ou plusieurs processeurs, amenant le ou les processeurs à exécuter un procédé comprenant :
la prise de l'image numérique d'un article, et
l'annotation de l'image numérique,
le support pouvant être lu par ordinateur comprenant en outre des instructions permettant :
la comparaison de l'image numérique à une image de signature et la détermination d'une qualité de l'article manufacturé, l'image de signature définissant des niveaux acceptable et inacceptable de paramètres d'image parmi les pixels de l'image numérique, les paramètres d'image comprenant le contraste, et une zone de test du contraste parmi les pixels étant utilisée pour rejeter l'article manufacturé sur la base de la valeur absolue de la sommation de toutes les valeurs de gris inférieures à 128 soustraite de la sommation de toutes les valeurs de gris supérieures à 128.

19. Support selon la revendication 18 comprenant en outre un moyen permettant de déduire la qualité de l'article.
